# EUROPEAN PATENT APPLICATION

(11) **EP 4 647 760 A1**
(43) Date of publication of application: **12.11.2025**
(21) Application number: 25174863.8
(22) Date of filing: 07.05.2025
(51) Int. Cl.: G01N 29/22, G01N 29/24

(54) **INSPECTING INTERNAL POWERPLANT COMPONENT USING INSPECTION SCOPE**

(30) Priority: 07.05.2024 US 202418657239
(71) Applicant: RTX Corporation, Farmington, CT 06032 (US)
(72) Inventor: CONEY, William B., Watertown, 02472 (US)
(74) Representative: Dehns

(57) **Abstract**

An inspection method is provided during which a laser lens (44, 46) is inserted into an interior (26) of a powerplant (24). The powerplant (24) includes a component (22) within the interior (26) of the powerplant (24). The laser lens (44, 46) is arranged with a line of sight to the component (22). A pulsed laser beam is directed from the laser lens (44, 46) onto a surface (58) of the component (22) to induce vibrations in the component (22). A vibratory response in the component (22) excited by the vibrations is measured using a sensor (62) to provide sensor data.

## Description

### TECHNICAL FIELD

This disclosure relates generally to inspection and, more particularly, to non-destructive inspection for internal defects.

### BACKGROUND INFORMATION

Various systems and methods are known in the art for inspecting a component for internal defects. While these known inspection systems and methods have various benefits, there is still room in the art for improvement.

### SUMMARY OF THE DISCLOSURE

According to an aspect of the present invention, an inspection method is provided during which a laser lens is inserted into an interior of a powerplant. The powerplant includes a component within the interior of the powerplant. The laser lens is arranged with a line of sight to the component. A pulsed laser beam is directed from the laser lens onto a surface of the component to induce vibrations in the component. A vibratory response in the component excited by the vibrations is measured using a sensor to provide sensor data.

According to another aspect of the present invention, another inspection method is provided during which a head of an inspection scope is disposed into an interior of a powerplant. The head of the inspection scope includes a laser lens. The powerplant includes a component within the interior of the powerplant. The head of the inspection scope is arranged within the interior of the powerplant to provide a line of sight from the laser lens to a surface of the component. A pulsed laser beam is directed from a laser excitation source, through the laser lens, onto the surface of the component to induce vibrations in the component. A vibratory response in the component excited by the vibrations is measured using a sensor to provide sensor data.

The measuring may include receiving a reflected laser beam at a laser vibrometer from the surface of the component through the laser lens.

The laser lens may be a first laser lens. The head of the inspection scope may also include a second laser lens. The measuring may include receiving a reflected laser beam at a laser vibrometer from the surface of the component through the second laser lens.

According to still another aspect of the present invention, a system is provided for inspecting a component within an interior of a powerplant. This system includes an inspection scope and a laser excitation source. The inspection scope includes a scope head, a scope body, a laser lens and an optical fiber. The scope body extends longitudinally along a centerline to the scope head. The laser lens is configured with the scope head at a longitudinal distal end of the inspection scope. The optical fiber extends longitudinally within the scope body and is optically coupled with the laser lens. The inspection scope is configured for insertion of the scope head into the interior of the powerplant to dispose the laser lens in a line of sight with a surface of the component within the interior of the powerplant. The laser excitation source is optically coupled to the laser lens through the optical fiber. The laser excitation source is configured to direct a pulsed laser beam through the laser lens onto the surface of the component to induce vibrations in the component.

The system may also include a laser vibrometer and a processing system. The laser vibrometer may be optically coupled to the laser lens. The laser vibrometer may be configured to receive a reflected laser beam from the surface of the component through the laser lens. The laser vibrometer may be configured to provide sensor data indicative of a vibratory response in the component excited by the vibrations in response to receiving the reflected laser beam. The processing system may be configured to process the sensor data to determine a characteristic of the component based on the sensor data.

The laser lens may be a first laser lens. The inspection scope may also include a second laser lens configured with the scope head at the longitudinal distal end of the inspection scope. The system may also include a laser vibrometer and a processing system. The laser vibrometer may be optically coupled to the second laser lens. The laser vibrometer may be configured to receive a reflected laser beam from the surface of the component through the second laser lens. The laser vibrometer may be configured to provide sensor data indicative of a vibratory response in the component excited by the vibrations in response to receiving the reflected laser beam. The processing system may be configured to process the sensor data to determine a characteristic of the component based on the sensor data.

The inspection method may also include determining a first characteristic of the component based on the sensor data.

The inspection method may also include processing the sensor data to detect a defect internal to the component.

The pulsed laser beam may be received from a laser excitation source disposed outside of the powerplant.

The sensor may be configured as or otherwise include a laser vibrometer.

The inspection method may also include receiving a reflected laser beam from the component through the laser lens at the laser vibrometer.

The laser lens may be a first laser lens. The inspection method may also include: inserting a second laser lens into the interior of the powerplant; arranging the second laser lens with a line of sight to the component; and receiving a reflected laser beam from the component through the second laser lens at the laser vibrometer.

The inspection method may also include: inserting a head of an inspection scope into the interior of the powerplant, the head of the inspection scope comprising the first laser lens and the second laser lens; and arranging the head of the inspection scope within the interior of the powerplant to arrange the first laser lens with the line of sight to the component and to arrange the second laser lens with the line of sight to the component.

The inspection method may also include: inserting a head of a first inspection scope into the interior of the powerplant, the head of the first inspection scope comprising the first laser lens; arranging the head of the first inspection scope within the interior of the powerplant to arrange the first laser lens with the line of sight to the component; inserting a head of a second inspection scope into the interior of the powerplant, the head of the second inspection scope comprising the second laser lens; and arranging the head of the second inspection scope within the interior of the powerplant to arrange the second laser lens with the line of sight to the component.

The laser vibrometer may be disposed outside of the powerplant.

The inspection method may also include: inserting a head of an inspection scope into the interior of the powerplant, the head of the inspection scope comprising the laser lens; and arranging the head of the inspection scope within the interior of the powerplant to arrange the laser lens with the line of sight to the component.

The powerplant may be configured as or otherwise include a turbine engine.

The component may be configured as a rotor disk.

The powerplant may be installed with an aircraft during the inserting, the arranging, the directing, and the measuring.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIG. 2 is a flow diagram of a method for inspecting a component of a powerplant.
FIGS. 3A and 3B are graphs of various measured resonant signatures compared to a model resonant signature.
FIG. 4 is a schematic illustration of the inspection system with the powerplant component, where an inspection scope of the inspection system is further spaced from the powerplant component.
FIG. 5 is a schematic illustration of the inspection system with the powerplant component, where the inspection scope includes a common lens.
FIG. 6 is a partial schematic illustration of the inspection system with the powerplant component, where the inspection system includes multiple inspection scopes.

### DETAILED DESCRIPTION

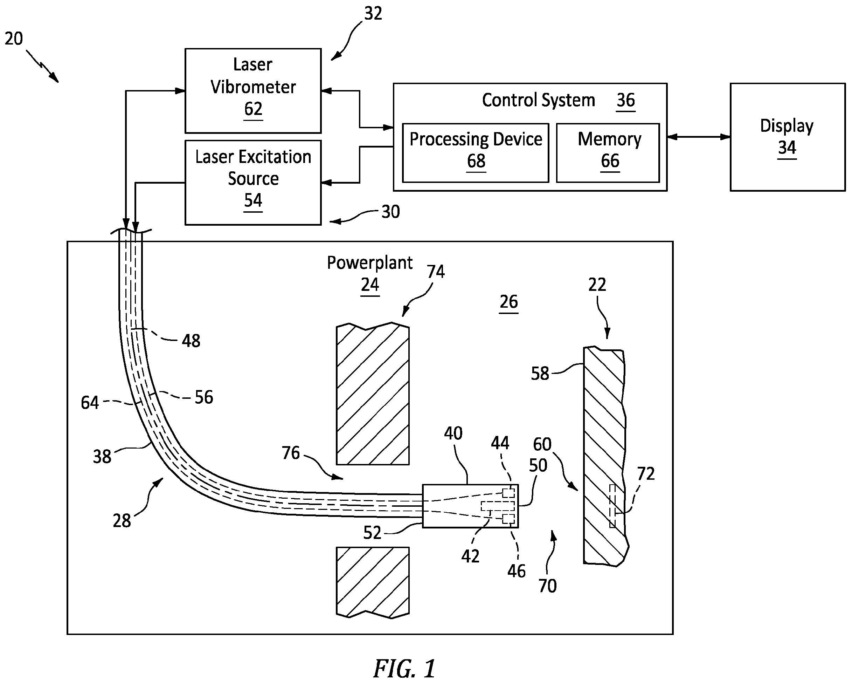

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured as an inspection scope inspection system. The inspection system 20 of FIG. 1, for example, includes an electronic inspection scope 28 (e.g., a borescope), a vibration actuation system 30, a vibration sensing system 32, a display 34 (e.g., a screen, a monitor, a touch screen, etc.) and a control system 36. The inspection scope 28 of FIG. 1 includes a scope body 38 (e.g., a tether), a scope head 40, a scope sensor 42, a vibration actuation system (VAS) laser lens 44 and a vibration sensing system (VSS) laser lens 46.

The scope body 38 extends longitudinally along a longitudinal centerline 48 of the inspection scope 28 and its members 38 and 40 from a base end of the inspection scope 28 to the scope head 40. The scope body 38 is a flexible body. The scope body 38 may include one or more internal actuators for manipulating a configuration of the inspection scope 28 and its scope body 38 to aid in maneuvering the scope head 40 within the interior 26 of the aircraft powerplant 24 towards the powerplant component 22.

The scope head 40 is disposed at a longitudinal distal end 50 of the inspection scope 28. The scope head 40 of FIG. 1, for example, extends longitudinally along the centerline 48 from a longitudinal proximal end 52 of the scope head 40 to the scope distal end 50 of the inspection scope 28; here, also a longitudinal distal end of the scope head 40. The scope sensor 42, the VAS laser lens 44 and the VSS laser lens 46 are each arranged with (e.g., mounted to and/or disposed in) the scope head 40. The scope sensor 42, the VAS laser lens 44 and/or the VSS laser lens 46 may also each be disposed at (e.g., on, adjacent or proximate) the scope distal end 50.

The scope sensor 42 is configured to aid in the maneuvering of the scope head 40 and, more particularly, the VAS laser lens 44 and/or the VSS laser lens 46 within the interior 26 of the aircraft powerplant 24 towards the powerplant component 22. The scope sensor 42, for example, may be configured as a camera (e.g., a still image camera and/or a video camera), a proximity sensor, or the like which (e.g., in real time) locates the scope head 40 and/or the scope head members 44 and 46 during the maneuvering of the scope head 40, within the interior 26 of the aircraft powerplant 24, towards the powerplant component 22.

The VAS laser lens 44 and/or the VSS laser lens 46 may each be configured as a lens for focusing a laser beam. The VAS laser lens 44 and/or the VSS laser lens 46 may each also or alternatively be configured as a lens for collimating a laser beam.

The vibration actuation system 30 is configured to induce vibrations in the powerplant component 22 based on a control signal received from the control system 36. The vibration actuation system 30 of FIG. 1, for example, includes a pulsed laser excitation source 54, a vibration actuation system (VAS) optical fiber 56 and the VAS laser lens 44. The laser excitation source 54 is in signal communication (e.g., hardwired and/or wirelessly coupled) with the control system 36. The laser excitation source 54 is configured to generate a pulse actuation system laser beam in response to receiving the control signal. The VAS optical fiber 56 optically couples the laser excitation source 54 to the VAS laser lens 44. The VAS optical fiber 56 of FIG. 1, for example, extends from an optical coupling with the laser excitation source 54, longitudinally along the centerline 48 within the inspection scope 28 and its members 38 and 40, to an optical coupling with the VAS laser lens 44. The VAS optical fiber 56 is thereby configured to direct the actuation system laser beam generated by the laser excitation source 54 to the VAS laser lens 44. The VAS laser lens 44 is configured to direct the actuation system laser beam onto an exterior surface 58 of the powerplant component 22 at an inspection location 60; e.g., a target location. Here, a rapid periodic heating of material of the powerplant component 22 at the inspection location 60 by the actuation system laser beam may induce vibrations in the powerplant component 22.

The vibration sensing system 32 is configured to measure a vibratory response in the powerplant component 22 excited by the vibrations induced by the vibration actuation system 30 and its pulsed actuation system laser beam. The vibration sensing system 32 is further configured to provide sensor data (e.g., an output signal or signals) to the control system 36 indicative of the measured vibratory response. The vibration sensing system 32 of FIG. 1, for example, includes a laser vibrometer 62, a vibration sensing system (VSS) optical fiber 64 and the VSS laser lens 46. The laser vibrometer 62 is in signal communication with the control system 36. The laser vibrometer 62 is configured to generate a sensing system laser beam, for example, in response to receiving a control signal from the control system 36. The VSS optical fiber 64 optically couples the laser vibrometer 62 to the VSS laser lens 46. The VSS optical fiber 64 of FIG. 1, for example, extends from an optical coupling with the laser vibrometer 62, longitudinally along the centerline 48 within the inspection scope 28 and its members 38 and 40, to an optical coupling with the VSS laser lens 46. The VSS optical fiber 64 is thereby configured to direct the sensing system laser beam generated by the laser vibrometer 62 to the VSS laser lens 46. The VSS laser lens 46 is configured to direct the sensing system laser beam onto the component surface 58 at the inspection location 60 (or a measurement location near the inspection location 60). The sensing system laser beam may reflect against the component surface 58 such that a reflected laser beam is directed from the powerplant component 22 back to the laser vibrometer 62 sequentially through the VSS laser lens 46 and the VSS optical fiber 64. The laser vibrometer 62 is configured to measure parameters of the reflected laser beam to provide the sensor data.

The control system 36 is in signal communication with the inspection scope 28 and the display 34 along with the vibration actuation system 30 and the vibration sensing system 32. The control system 36 may be implemented with a combination of hardware and software. The hardware may include memory 66 and at least one processing device 68, which processing device 68 may include one or more single-core and/or multi-core processors. The hardware may also or alternatively include analog and/or digital circuitry other than that described above.

The memory 66 is configured to store software (e.g., program instructions) for execution by the processing device 68, which software execution may control and/or facilitate performance of one or more operations such as those described below. The memory 66 may be a non-transitory computer readable medium. For example, the memory 66 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

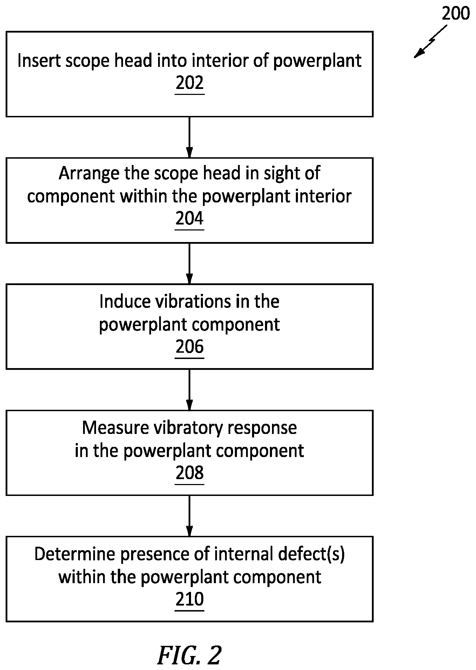

FIG. 2 is a flow diagram of a method 200 for inspecting the powerplant component 22 - a specimen component to be inspected. For ease of description, the inspection method 200 is described below with reference to the inspection system 20 of FIG. 1. The powerplant component 22 is also described below as being installed with the aircraft powerplant 24 and disposed within the interior 26 of the aircraft powerplant 24, where the aircraft powerplant 24 remains installed onboard the aircraft. The inspection method 200 of the present disclosure, however, may alternatively be performed with other inspection systems and/or while the aircraft powerplant 24 is removed from the aircraft and/or when the aircraft powerplant 24 is partially disassembled into one or more sub-assemblies.

In step 202, the scope head 40 and its laser lenses 44 and 46 are inserted into the interior 26 of the aircraft powerplant 24. An access cover, a powerplant component and/or the like, for example, may be removed from the aircraft powerplant 24 or opened to provide an access port into the interior 26 of the aircraft powerplant 24. The scope head 40 and its laser lenses 44 and 46 may then be passed through the access port into the interior 26 of the aircraft powerplant 24.

In step 204, the scope head 40 is arranged within the interior 26 of the aircraft powerplant 24 in sight of the powerplant component 22. The inspection scope 28 and its scope head 40, for example, may be maneuvered to locate the scope head 40 next to the powerplant component 22. This maneuvering may include passing the scope head 40 through one or more passages, ducts, conduits, plenums, ports, etc. within the aircraft powerplant 24 until, for example, the scope head 40 is arranged next to the inspection location 60 on the component surface 58. Here, the scope head 40 is separated from the powerplant component 22 and its component surface 58 by a gap 70 (e.g., an air gap). The inspection scope 28 and its members 44 and 46 are thereby physically disengaged from the powerplant component 22. However, the VAS laser lens 44 and the VSS laser lens 46 are each arranged within the interior 26 of the aircraft powerplant 24 in a line of sight to the inspection location 60 on the component surface 58.

In step 206, vibrations are induced in the powerplant component 22 using the pulsed actuation system laser beam at the inspection location 60. The control system 36, for example, may signal the vibration actuation system 30 and its laser excitation source 54 to generate the actuation system laser beam. The laser excitation source 54 directs the actuation system laser beam through the VAS optical fiber 56 to the VAS laser lens 44. The VAS laser lens 44 directs the actuation system laser beam through the gap 70 onto the component surface 58 at the inspection location 60. Here, the rapid periodic heating of the powerplant component material at the inspection location 60 by the actuation system laser beam may induce vibrations in the powerplant component 22; e.g., via a thermal-vibratory effect. The vibrations may be induced to sweep across / over a range of frequencies during the step 206; e.g., a five kilohertz (5 kHz) range, a ten kilohertz (10 kHz) range, a twenty kilohertz (20 kHz) range, a one hundred kilohertz (100 kHz) range, or any other suitable range which will facilitate mapping of a response signature as described below. The vibrations may thereby be induced at multiple different frequencies spanning the frequency range.

In step 208, a vibratory response is measured in the powerplant component 22 using the vibration sensing system 32 at the inspection location 60. This vibratory response is induced by the vibrations generated in the powerplant component 22 by the pulsed actuation system laser beam. The control system 36, for example, may signal the vibration sensing system 32 and its laser vibrometer 62 to generate the sensing system laser beam. The laser vibrometer 62 directs the sensing system laser beam through the VSS optical fiber 64 to the VSS laser lens 46. The VSS laser lens 46 directs the sensing system laser beam through the gap 70 onto the component surface 58 at the inspection location 60 (or a measurement location near the inspection location 60). This sensing system laser beam reflects against the component surface 58 such that the reflected laser beam is directed from the powerplant component 22 back to the laser vibrometer 62 sequentially through the VSS laser lens 46 and the VSS optical fiber 64. The laser vibrometer 62 may then measure parameters of the reflected laser beam to provide the sensor data to the control system 36.

In step 210, the sensor data is processed to determine whether or not the powerplant component 22 includes any internal defects 72 at and/or around the respective inspection location 60. Herein, the term "defect" may describe a physical anomaly present within a component which may negatively affect a useful life of that component and/or performance of that component. Examples of the internal defect(s) 72 include, but are not limited to, cracks, voids, corrosion, density variations, areas of poor solidification (e.g., sintering) and/or the like.

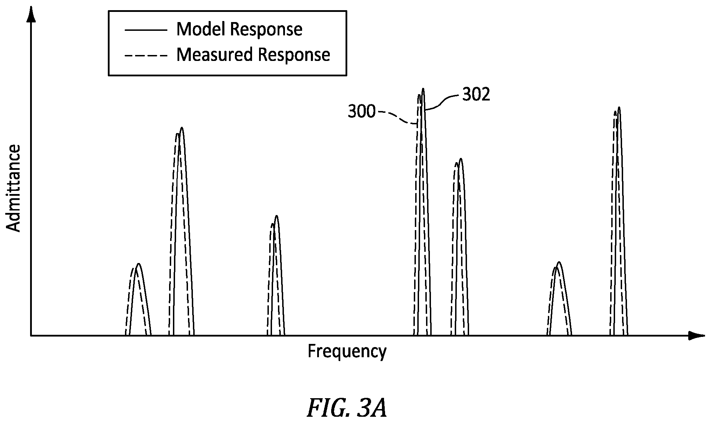

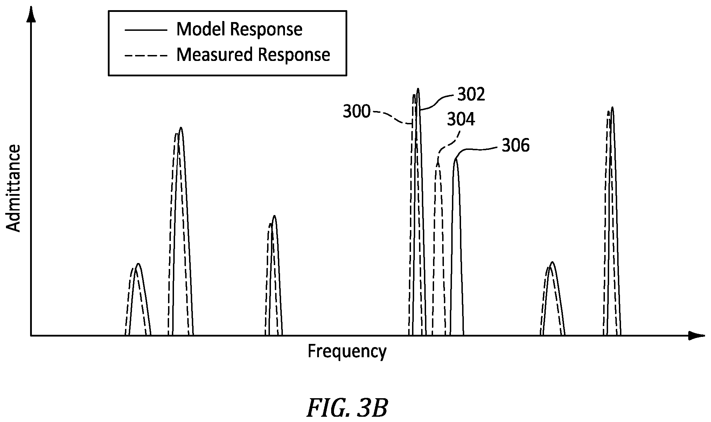

The control system 36, for example, may analyze the measured vibratory response to determine resonant frequencies and/or other structural mode parameters for the powerplant component 22. Referring to FIG. 3A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the control system 36 may determine the powerplant component 22 does not include, or there is a low probability that the powerplant component 22 includes, any internal defects. For example, a measured resonance signature 300 of the measured resonant frequencies in FIG. 3A is the same as, or is within tolerance of, a model resonance signature 302 of expected resonant frequencies for the model component without any internal defects. Note, the matching model and measured responses are shown in FIGS. 3A and 3B slightly laterally offset for clarity of illustration. By contrast referring to FIG. 3B, where one or more of the resonant frequencies and/or other structural mode parameters do not match (or are outside tolerance of) the corresponding expected resonant frequencies and/or other structural mode parameters for the model component without any internal defects, the control system 36 may determine the powerplant component 22 does include, or there is a high probability that the powerplant component 22 includes, one or more internal defects 72. For example, the resonance signature 300 of the measured resonant frequencies in FIG. 3B includes an outlier resonant frequency 304 which is different than (e.g., does not align with) and is outside of tolerance of a corresponding resonant frequency 306 for the resonance signature 302 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 200 and the inspection system 20 may non-destructively identify presence of internal defect(s) 72 within the powerplant component 22 while that powerplant component 22 remains installed with the aircraft powerplant 24 and/or the aircraft powerplant 24 remains installed onboard the aircraft.

When the step 210 identifies presence of no internal defects in material of the powerplant component 22, information indicative of such may be presented on the display 34. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 210 identifies the presence of internal defect(s) 72, information indicative of such may be presented on the display 34. This information may simply identify the presence of internal defects 72. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 200 is described above identifying whether or not the inspected powerplant component 22 includes any internal defects 72, this inspection method 200 may also (or alternatively) be extended to determine one or more other physical characteristics about the inspected powerplant component 22.

In some embodiments, the vibrations induced in the powerplant component 22 during the step 306 may have a frequency equal to or greater than thirty kilohertz (30 kHz); e.g., equal to or greater than forty kilohertz (40 kHz) or fifty kilohertz (50 kHz) up to about two hundred and fifty kilohertz (250kHz). This frequency may be a lower bound, an upper bound or an intermediate frequency within the range of frequencies swept during the vibration inducement step 206. By vibrating the powerplant component 22 at such a relatively high frequency, the inspection method 200 and/or the inspection system 20 may detect one or more internal defects 72 with a dimension (e.g., a width, a length, etc.) equal to or less than one hundred mils (0.10 inches; 2.54 mm) or one hundred and fifty mils (0.15 inches; 3.81 mm). More particularly, the inspection method 200 and/or the inspection system 20 may detect one or more internal defects 72 with a relatively small dimension equal to or less than fifty mils (0.05 inches; 1.27 mm); e.g., equal to or less than forty mils (0.04 inches; 1.02 mm). Here, the powerplant component 22 is constructed from a metal. It is contemplated, however, the vibrations may alternatively be induced at a frequency below thirty kilohertz (30 kHz) when detecting larger internal defect(s) 72 within the powerplant component 22 and/or when inspecting a powerplant component with another material construction. Moreover, the vibrations may still alternatively be induced at a frequency above two hundred and fifty kilohertz (250kHz) when detecting even smaller internal defect(s) 72 within the powerplant component 22 and/or when inspecting a powerplant component with still another material construction.

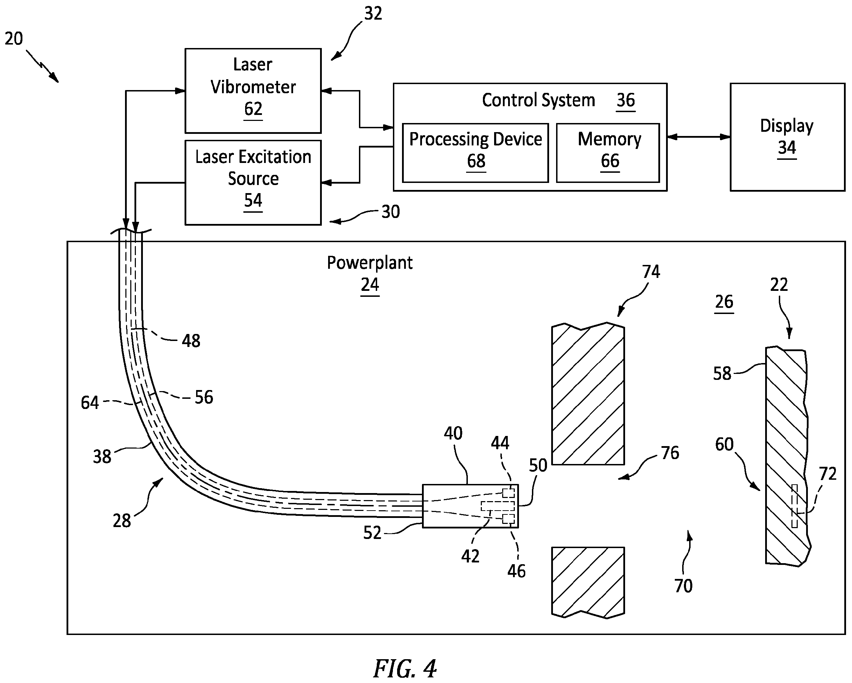

In some embodiments, referring to FIG. 1, the scope head 40 and its laser lenses 44 and 46 may be arranged in a space between neighboring components 22 and 74 within the interior 26 of the aircraft powerplant 24. No other component of the aircraft powerplant 24 therefore may be arranged between (a) the scope head 40 and its laser lenses 44 and 46 and (b) the inspection location 60 on the powerplant component 22. In other embodiments, referring to FIG. 4, the second powerplant component 74 may be arranged between (a) the scope head 40 and its laser lenses 44 and 46 and (b) the inspection location 60 on the powerplant component 22. The laser lenses 44 and 46 of FIG. 4, however, each still has its line of sight to the inspection location 60 on the powerplant component 22 through, for example, an aperture 76 in the second powerplant component 74.

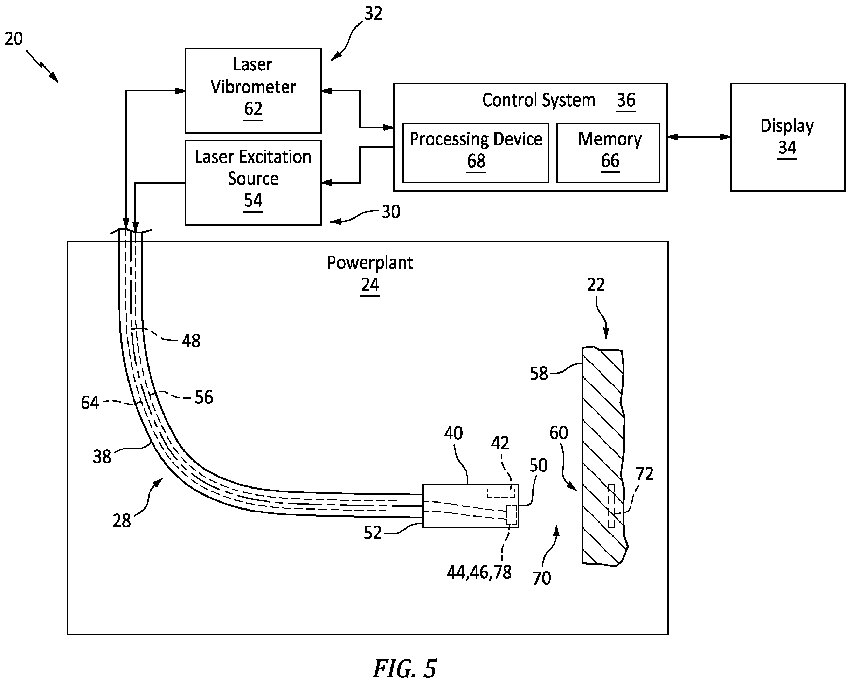

In some embodiments, referring to FIGS. 1 and 4, the vibration actuation system 30 and the vibration sensing system 32 may each be configured with a respective dedicated laser lens 44, 46. In other embodiments, referring to FIG. 5, the vibration actuation system 30 and the vibration sensing system 32 may be configured with a common laser lens 78 - a VAS / VSS laser lens 46. Here, the common laser lens 78 is optically coupled with both the laser excitation source 54 and the laser vibrometer 62 in parallel.

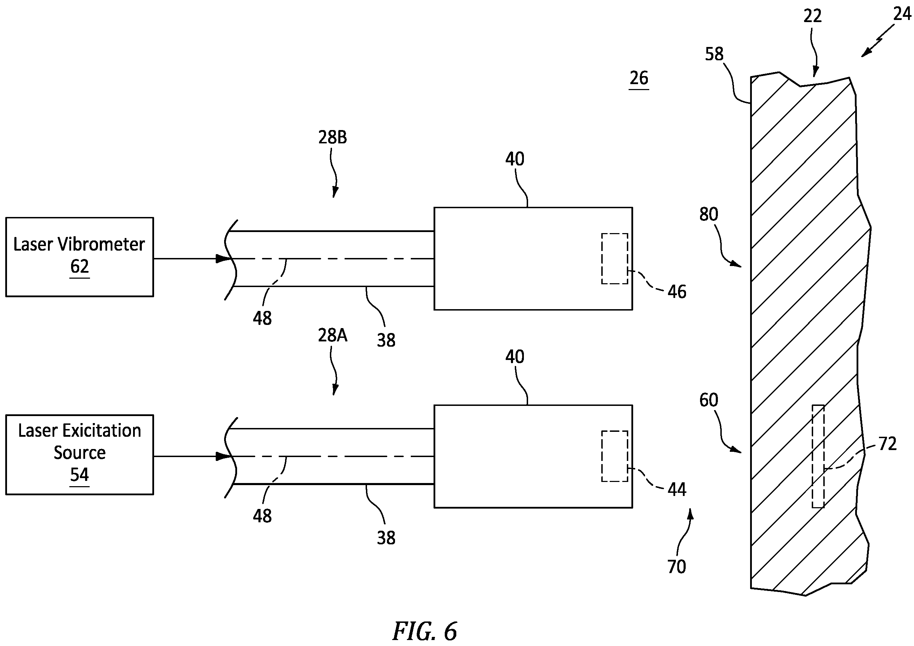

In some embodiments, referring to FIGS. 1, 4 and 5, the vibration actuation system 30 and the vibration sensing system 32 may be configured with the common inspection scope 28. In other embodiments, referring to FIG. 6, the vibration actuation system 30 and the vibration sensing system 32 may each be configured with a respective dedicated inspection scope 28A and 28B (generally referred to as "28"). With such an arrangement, the VAS laser lens 44 with the vibration actuation system (VAS) inspection scope 28A may direct the actuation system laser beam against the powerplant component 22 at the inspection location 60 whereas the VSS laser lens 46 with the vibration sensing system (VSS) inspection scope 28B may direct the sensing system laser beam against the powerplant component 22 at a measurement location 80 next to or near the inspection location 60. Of course, it is contemplated the VAS laser lens 44 with the VAS inspection scope 28A and the VSS laser lens 46 with the VSS inspection scope 28B may alternatively both direct their respective laser beams to the common inspection location 60.

The inspection system 20 is described above as including the vibration sensing system 32 as its sensor for measuring the vibratory response in the powerplant component 22. The present disclosure, however, is not limited to such an exemplary vibratory response sensor, particularly where the inspection system 20 includes multiple inspection scopes. For example, the sensor may alternatively be configured as or otherwise include a piezoelectric device.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

**1.** An inspection method, comprising:
inserting a laser lens (44, 46) into an interior (26) of a powerplant (24), the powerplant (24) comprising a component (22) within the interior (26) of the powerplant (24);
arranging the laser lens (44, 46) with a line of sight to the component (22);
directing a pulsed laser beam from the laser lens (44, 46) onto a surface (58) of the component (22) to induce vibrations in the component (22); and
measuring a vibratory response in the component (22) excited by the vibrations using a sensor (62) to provide sensor data.

**2.** The inspection method of claim 1, further comprising determining a first characteristic of the component (22) based on the sensor data.

**3.** The inspection method of claim 1 or 2, further comprising processing the sensor data to detect a defect (72) internal to the component (22).

**4.** The inspection method of claim 1, 2 or 3, wherein the pulsed laser beam is received from a laser excitation source (54) disposed outside of the powerplant (24).

**5.** The inspection method of any preceding claim, wherein the sensor (62) comprises a laser vibrometer (62) and, optionally, the laser vibrometer (62) is disposed outside of the powerplant (24).

**6.** The inspection method of claim 5, further comprising receiving a reflected laser beam from the component (22) through the laser lens (44, 46) at the laser vibrometer (62).

**7.** The inspection method of claim 5, wherein the laser lens (44) is a first laser lens (44), and the inspection method further comprises:
inserting a second laser lens (46) into the interior (26) of the powerplant (24);
arranging the second laser lens (46) with a line of sight to the component (22); and
receiving a reflected laser beam from the component (22) through the second laser lens (46) at the laser vibrometer (62).

**8.** The inspection method of claim 7, further comprising:
inserting a head (40) of an inspection scope (28) into the interior (26) of the powerplant (24), the head (40) of the inspection scope (28) comprising the first laser lens (44) and the second laser lens (46); and
arranging the head (40) of the inspection scope (28) within the interior (26) of the powerplant (24) to arrange the first laser lens (44) with the line of sight to the component (22) and to arrange the second laser lens (46) with the line of sight to the component (22).

**9.** The inspection method of claim 7, further comprising:
inserting a head (40) of a first inspection scope (28A) into the interior (26) of the powerplant (24), the head (40) of the first inspection scope (28A) comprising the first laser lens (44);
arranging the head (40) of the first inspection scope (28A) within the interior (26) of the powerplant (24) to arrange the first laser lens (44) with the line of sight to the component (22);
inserting a head (40) of a second inspection scope (28B) into the interior (26) of the powerplant (24), the head (40) of the second inspection scope (28B) comprising the second laser lens (46); and
arranging the head of the second inspection scope (28B) within the interior (26) of the powerplant (24) to arrange the second laser lens (46) with the line of sight to the component (22).

**11.** The inspection method of any of claims 1 to 6, further comprising:
inserting a head (40) of an inspection scope (28) into the interior (26) of the powerplant (24), the head (40) of the inspection scope (28) comprising the laser lens (44, 46); and
arranging the head (40) of the inspection scope (28) within the interior (26) of the powerplant (24) to arrange the laser lens (44, 46) with the line of sight to the component (22).

**11.** The inspection method of any preceding claim, wherein the powerplant (24) comprises a turbine engine, and/or wherein the component (22) is configured as a rotor disk.

**12.** The inspection method of any preceding claim, wherein the powerplant (24) is installed with an aircraft during the inserting, the arranging, the directing, and the measuring.

**13.** A system (20) for inspecting a component (22) within an interior (26) of a powerplant (24), the system (20) comprising:
an inspection scope (28) including a scope head (40), a scope body (38), a laser lens (44, 46) and an optical fiber (56), the scope body (38) extending longitudinally along a centerline (48) to the scope head (40), the laser lens (44, 46) configured with the scope head (40) at a longitudinal distal end (50) of the inspection scope (28), the optical fiber (56) extending longitudinally within the scope body (38) and optically coupled with the laser lens (44, 46), and the inspection scope (28) configured for insertion of the scope head (40) into the interior (26) of the powerplant (24) to dispose the laser lens (44, 46) in a line of sight with a surface (58) of the component (22) within the interior (26) of the powerplant (24); and
a laser excitation source (54) optically coupled to the laser lens (44, 46) through the optical fiber (56), the laser excitation source (54) configured to direct a pulsed laser beam through the laser lens (44, 46) onto the surface (58) of the component (22) to induce vibrations in the component (22).

**14.** The system of claim 13, further comprising:
a laser vibrometer (62) optically coupled to the laser lens (44, 46), the laser vibrometer (62) configured to receive a reflected laser beam from the surface (58) of the component (22) through the laser lens (44, 46), and the laser vibrometer (62) configured to provide sensor data indicative of a vibratory response in the component (22) excited by the vibrations in response to receiving the reflected laser beam; and
a processing system (68) configured to process the sensor data to determine a characteristic of the component (22) based on the sensor data.

**15.** The system of claim 13, wherein the laser lens (44) is a first laser lens (44), the inspection scope (28) further includes a second laser lens (46) configured with the scope head (40) at the longitudinal distal end (50) of the inspection scope (28), and the system (20) further comprises:
a laser vibrometer (62) optically coupled to the second laser lens (46), the laser vibrometer (62) configured to receive a reflected laser beam from the surface (58) of the component (22) through the second laser lens (46), and the laser vibrometer (62) configured to provide sensor data indicative of a vibratory response in the component (22) excited by the vibrations in response to receiving the reflected laser beam; and
a processing system (68) configured to process the sensor data to determine a characteristic of the component (22) based on the sensor data.
